# EUROPEAN PATENT APPLICATION

(11) **EP 4 512 593 A1**
(43) Date of publication of application: **26.02.2025**
(21) Application number: 23791780.2
(22) Date of filing: 13.04.2023
(51) Int. Cl.: B29C 39/10, B29C 39/24, B29C 39/44, B29C 70/06, B29C 70/48, B29C 70/68

(54) **RESIN MOLDED BODY AND METHOD FOR MANUFACTURING SAME**

(30) Priority: 20.04.2022 JP 2022069296
(71) Applicant: Toray Industries, Inc., Tokyo 103-8666 (JP)
(72) Inventor: TAKEBE, Yoshiki, Iyo-gun, Ehime 791-3193 (JP); KAWAHARA Kota, Iyo-gun, Ehime 791-3193 (JP); HONMA, Masato, Iyo-gun, Ehime 791-3193 (JP)
(74) Representative: Kador & Partner Part mbB
(86) International application number: PCT/JP2023/015003
(87) International publication number: WO 2023/204132

(57) **Abstract**

Provided is a resin molded body including: a resin porous body that contains a carbon fiber nonwoven fabric and has continuous voids; and a skin layer formed of a thermosetting resin composition. In this resin molded body, the continuous voids have a porosity of 50% by volume to 97% by volume, the skin layer has a porosity of 5% by volume or less, and the thermosetting resin composition is embedded at a depth of 50 µm to 1,000 µm on the resin porous body side of the resin molded body. Also provided is a method of producing a fiber-reinforced resin molded body, the method including, in the order mentioned: the preform forming step of forming a preform using a resin porous body that has continuous voids and a flexural modulus of 10 MPa or more based on the ISO178 method (1993); the sealing step of forming a closed space that encloses the preform with a molding die and/or a film; the injection step of injecting a thermosetting resin composition into the closed space; and the curing step of maintaining a temperature equal to or higher than a curing temperature of the thermosetting resin composition. This method provides a resin molded body that contains a porous structure and is excellent in surface quality and productivity.

## Description

### Technical Field

The present invention relates to a resin molded body and a method of producing the same. More particularly, the present invention relates to: a resin molded body that includes a resin porous body having continuous voids; and a method of producing the same.

### Background Art

Resin molded bodies containing a porous structure are used in a wide range of fields because of their excellent lightweightness. However, since their structures are porous, these resin molded bodies reflect the surface shape of voids and expose irregularities on the surface, making it a problem to ensure the surface quality. Further, deterioration of the mechanical properties due to the porous structures may be a problem as well.

These problems are generally solved by providing a skin material having excellent mechanical properties and surface quality on the surface of a resin porous body. For example, Patent Literature 1 discloses a production method for obtaining a molded article having excellent surface quality by injection-molding a thermoplastic resin on the surface of a resin porous body.

### Citation List

### Patent Literature

[Patent Literature 1] WO 2019/189631

### Summary of Invention

### Technical Problem

In the production method of Patent Literature 1, however, the thermoplastic resin used for injection molding generally has a high viscosity and requires a high injection pressure; therefore, defective impregnation and misalignment of the resin porous body may occur at the time of injection, which leads to a problem that it is difficult to stably obtain a high-quality molded article.

The present invention was made in view of the above-described problems, and an object of the present invention is to provide a resin molded body that contains a porous structure and has excellent surface quality and productivity.

### Solution to Problem

In order to solve the above-described problems, the present invention has the following constitution.
[1] A resin molded body, including:
   a resin porous body that contains a carbon fiber nonwoven fabric and has continuous voids; and
   a skin layer formed of a thermosetting resin composition,
   wherein
   the continuous voids have a porosity of 50% by volume to 97% by volume,
   the skin layer has a porosity of 5% by volume or less, and
   the thermosetting resin composition is embedded at a depth of 50 µm to 1,000 µm on the resin porous body side of the resin molded body.
[2] The resin molded body according to [1], wherein the thermosetting resin composition has a post-curing glass transition temperature of 150°C or higher as measured by a differential scanning calorimeter based on JIS K7121 (2012).
[3] The resin molded body according to [1] or [2], wherein the carbon fiber nonwoven fabric is a nonwoven fabric which contains discontinuous carbon fibers, and in which the discontinuous carbon fibers contain carbon fibers having a fiber length of 25 mm to 50 mm in a range of 1% by mass or more but less than 50% by mass, and carbon fibers having a fiber length of 0.1 mm or more but less than 25 mm in a range of more than 50% by mass.
[4] The resin molded body according to any one of [1] to [3], wherein the carbon fiber nonwoven fabric is composed of discontinuous carbon fibers dispersed in filament units.
[5] The resin molded body according to [3] or [4], wherein the discontinuous carbon fibers contained in the resin porous body are isotropically oriented in the in-plane direction.
[6] The resin molded body according to any one of [1] to [5], wherein the resin porous body contains a resin that does not melt at a curing temperature of the thermosetting resin composition.
[7] The resin molded body according to any one of [3] to [5], wherein the resin porous body has a structure in which the discontinuous carbon fibers have contact points where they intersect with each other, and the contact points are adhered by the resin constituting the resin porous body.
[8] The resin molded body according to any one of [1] to [7], wherein the skin layer is formed of a fiber-reinforced resin composition that contains a reinforcing fiber substrate and the thermosetting resin composition.
[9] The resin molded body according to any one of [1] to [8], wherein the thermosetting resin composition contains at least one thermosetting resin selected from the group consisting of epoxy resins, phenol resins, unsaturated polyester resins, vinyl ester resins, and urethane resins.
[10] The resin molded body according to any one of [1] to [9], wherein
   the resin porous body exists in a plural number, being arranged adjacent to one another, and
   contact surfaces of the adjacently arranged resin porous bodies are bonded with the thermosetting resin composition.
[11] A structural member including the resin molded body according to any one of [1] to [10], to which a bending load is mainly applied.
[12] A structural member for a mobile object, including the structural member according to [11].
[13] A structural member for a flying object, including the structural member according to [11].
[14] A method of producing a resin molded body, the method including, in the order mentioned:
   the preform forming step of forming a preform using a resin porous body that has continuous voids and a flexural modulus of 10 MPa or more based on the ISO178 method (1993);
   the sealing step of forming a closed space that encloses the preform with a molding die and/or a film;
   the injection step of injecting a thermosetting resin composition into the closed space; and
   the curing step of maintaining a temperature equal to or higher than a curing temperature of the thermosetting resin composition.
[15] The method of producing a resin molded body according to [14], wherein the resin porous body contains a resin that does not melt at the curing temperature of the thermosetting resin composition.
[16] The method of producing a resin molded body according to [14] or [15], wherein the continuous voids of the resin porous body have a porosity of 10% by volume to 97% by volume.
[17] The method of producing a resin molded body according to any one of [14] to [16], further comprising the pressurization step of pressurizing the preform after the injection step but before the curing step.
[18] The method of producing a resin molded body according to any one of [14] to [16], wherein the curing step does not involve pressurization of the preform.
[19] The method of producing a resin molded body according to any one of [14] to [16], wherein, in the preform forming step, the preform is formed by arranging the resin porous body in a plural number adjacent to one another.
[20] The method of producing a resin molded body according to [19], wherein, in the preform forming step, the adjacently arranged resin porous bodies are fitted and fixed to each other.
[21] The method of producing a resin molded body according to any one of [14] to [16], wherein, in the preform forming step, a preform in which a reinforcing fiber substrate is further arranged on the surface of the resin porous body is formed.
[22] The method of producing a resin molded body according to [21], wherein, in the injection step, the thermosetting resin composition is impregnated into the reinforcing fiber substrate and forms a fiber-reinforced resin layer on the surface of the resin porous body.

### Advantageous Effects of Invention

According to the present invention, a resin molded body that is excellent in surface quality, productivity, and lightweightness, as well as a method of producing the same can be obtained.

### Description of Embodiments

The present invention provides a resin molded body including: a resin porous body that contains a carbon fiber nonwoven fabric and has continuous voids; and a skin layer formed of a thermosetting resin composition. In this resin molded body, the continuous voids have a porosity of 50% by volume to 97% by volume, the skin layer has a porosity of 5% by volume or less, and the thermosetting resin composition is embedded at a depth of 50 µm to 1,000 µm on the resin porous body side of the resin molded body.

The term "carbon fiber nonwoven fabric" used herein refers to a form in which strands and/or monofilaments of discontinuous carbon fibers are planarly dispersed, and examples thereof include a chopped strand mat, a continuous strand mat, a papermaking mat, a carding mat, and an air-laid mat.

By using carbon fibers in the resin porous body, the rigidity of the resin porous body is increased, so that deformation and misalignment of a preform can be inhibited at the time of injecting the thermosetting resin composition constituting the skin layer. Further, by further reinforcing the high-rigidity resin porous body with the thermosetting resin composition constituting the skin layer, excellent mechanical properties can be eventually imparted to the resin molded body. Examples of the carbon fibers include PAN-based, rayon-based, lignin-based, and pitch-based carbon fibers, as well as graphite fibers. These fibers may be subjected to a surface treatment. Examples of the surface treatment include a treatment with a coupling agent, a treatment with a sizing agent, a treatment with a binder, and an adhesion treatment with an adhesive, in addition to a treatment of depositing a metal as a conductor. The carbon fibers may be used singly, or in combination of two or more kinds thereof. Among the above-described fibers, from the standpoint of weight reduction effect and mechanical properties, PAN-based, pitch-based, or rayon-based carbon fibers excellent in specific strength and specific rigidity are preferred, and PAN-based carbon fibers are more preferred.

In order to satisfy the productivity and surface properties of the desired resin molded body and to prevent excessive permeation of the thermosetting resin composition having a low viscosity into the voids of the resin porous body during a molding process, the continuous voids of the resin porous body have a porosity in a range of 50% by volume to 97% by volume. When the porosity of the continuous voids of the resin porous body is less than 50% by volume, the strength of the resin porous body used in the resin molded body can be improved, and a beautiful skin layer can be formed; however, it is difficult to attain the lightweightness that is an object of the resin molded body of the present invention. Meanwhile, when the porosity of the continuous voids of the resin porous body is higher than 97% by volume, an extremely lightweight resin molded body can be obtained; however, since excessive permeation of the liquid thermosetting resin composition contained in the skin layer occurs during handling, particularly during molding in the production, a large amount of the thermosetting resin composition is required, and this leads to deterioration of the productivity and an increase in the weight of the resulting resin molded body, making it difficult to achieve the lightweightness.

From the standpoint of satisfying the lightweightness and productivity of a fiber-reinforced resin molded body, the porosity of the continuous voids of the resin porous body is preferably 60% by volume to 90% by volume and, from the standpoint of obtaining particularly excellent lightweightness, the porosity of the continuous voids of the resin porous body is preferably 65% by volume to 80% by volume.

In order to satisfy the surface properties and productivity of the desired resin molded body, the skin layer has a porosity in a range of 5% by volume or less. When the porosity of the skin layer is higher than 5% by volume, voids are scattered in the skin layer of the resin molded body and cause sink marks, resulting in poor surface appearance. In order to prevent deterioration of the surface properties of the resin molded body, the porosity of the skin layer is more preferably 3% by volume or less, particularly preferably 0% by volume.

Further, the resin molded body of the present invention is a resin molded body in which voids of the contact surface between the skin layer and the resin porous body are embedded with the thermosetting resin composition constituting the skin layer. The term "embedded" used herein means that the thermosetting resin composition constituting the skin layer permeates into the voids of the surface of the resin porous body and is in a mechanically restrained state. By this, the skin layer and the resin porous body are firmly joined, so that a favorable resin molded body that is not damaged by, for example, a cutting process expected to be performed as a later step, or an impact during use. In a closed-cell porous material that is commonly used, since voids remain in the surface of its porous body, a skin layer and the porous body cannot be sufficiently joined and are peeled off by an impact or the like.

On the resin porous body side of the resin molded body, the embedded depth of the thermosetting resin composition is 50 µm to 1,000 µm. The "embedded depth" refers to a depth at which the thermosetting resin composition is embedded on the resin porous body side of the resin molded body, based on the contact surface of the skin layer and the resin porous body. When the embedded depth of the thermosetting resin composition is in the above-described range, the skin layer formed on the surface of the resin porous body having continuous voids is firmly joined with the resin porous body, and can be prevented from being easily peeled off due to impact during the product use, vibration in processing, or the like; therefore, defects in production can be reduced. The embedded depth is determined by the amount of the thermosetting resin composition permeating into the resin porous body and, from the standpoint of attaining satisfactory productivity while preventing the permeation amount from being excessively large and causing an increase in the weight of the resin molded body, the embedded depth is preferably in a range of 50 µm to 500 µm.

The embedded depth is determined by cutting a cross-section of the resin molded body, and observing and measuring the cross-section under a light microscope. The thermosetting resin composition embedded in the resin porous body is, in a thickness-direction observation field at its contact surface, observed to have a shape with plural recesses and protrusions. In this irregular shape, the vertical difference between the deepest recess and the highest protrusion is defined as dmax, while the vertical difference between the shallowest recess and the lowest protrusion is defined as dmin. An average value of dmax and dmin is defined as the embedded depth in the present invention. The embedded depth can be measured based on cross-sectional observation of the resin molded body. A sample in which a vertical cross-section of the resin molded body in the thickness direction is polished to be used as an observation surface is prepared. By observing the sample under a microscope, the vertical difference dmax between the deepest recess and the highest protrusion and the vertical difference dmin between the shallowest recess and the lowest protrusion, which are defined as described above, are each measured for an irregular interface in the field of view. This operation is performed 10 times for different images, and a value obtained by dividing a sum of the thus measured dmax and dmin by the number of measurements is taken as the above-described embedded depth.

The resin composition constituting the skin layer is a thermosetting resin composition. By selecting the resin composition in this manner, impregnation of resin can be facilitated in the production of a large molded article. The thermosetting resin composition preferably contains at least one thermosetting resin selected from the group consisting of epoxy resins, phenol resins, unsaturated polyester resins, vinyl ester resins, and urethane resins. These thermosetting resins can be provided with a sufficiently low viscosity by temperature control and composition adjustment, and enable to produce a high-quality resin molded body with high productivity. Further, these thermosetting resins exhibit excellent mechanical properties when cured, and can impart the resulting resin molded body with excellent mechanical properties. The thermosetting resin composition preferably reaches a degree of curing of 80% within 10 minutes at a curing temperature. This enables to mold and recover the resin molded body in a short time; therefore, the productivity can be improved.

The degree of curing of a resin composition containing a thermosetting resin as a main component is a value calculated by the below-described equation using the area of each peak, which appears as an exothermic reaction in differential scanning calorimetry performed under an inert gas atmosphere at a heating rate of 10°C/min, as the calorific value of each of the resin composition containing a thermosetting resin as a main component before curing and a cured product of the resin composition.

Degree of curing (%) = ((Caloric value of resin composition containing thermosetting resin as main component before curing) - (Caloric value of cured product of resin composition containing thermosetting resin as main component))/(Caloric value of resin composition containing thermosetting resin as main component before curing) × 100

The thermosetting resin contained as a main component in the thermosetting resin composition that reaches a degree of curing of 80% within 10 minutes at a curing temperature is not particularly limited, and examples thereof include: bisphenol A-type epoxy resins; bisphenol F-type epoxy resins; bisphenol S-type epoxy resins; biphenyl-type epoxy resins; naphthalene-type epoxy resins; novolac-type epoxy resins; epoxy resins having a fluorene skeleton; epoxy resins obtained using a copolymer of a phenol compound and dicyclopentadiene as a raw material; glycidyl ether-type epoxy resins, such as diglycidyl resorcinol, tetrakis(glycidyloxyphenyl)ethane, and tris(glycidyloxyphenyl)methane; and glycidylamine-type epoxy resins, such as tetraglycidyl diaminodiphenylmethane, triglycidyl aminophenol, triglycidyl aminocresol, and tetraglycidyl xylenediamine. These epoxy resins may be used singly, or in combination of plural kinds thereof.

Examples of a curing agent used in the resin composition include compounds such as dicyandiamides, aromatic amines, aliphatic amines, hydrazides, aromatic ureas, imidazoles, and Lewis acid complexes. Among these curing agents, aromatic amines and dicyandiamides can be preferably used since these compounds allow the resulting resin molded body to have excellent mechanical properties.

The curing temperature can be selected in accordance with the reaction temperature of the curing agent contained in the thermosetting resin composition. For example, the curing temperature is preferably in a range of 130 to 150°C in the case of using dicyandiamide as the curing agent, or in a range of 160 to 180°C in the case of using diaminodiphenyl sulfone as the curing agent.

Further, from the standpoint of sufficiently curing the thermosetting resin composition in the below-described curing step and thereby enabling to inhibit a change in the degree of permeation and the shape of the thermosetting resin composition after removing the resulting resin molded body from a molding die or a film and to obtain a high-quality resin molded body, as well as from the standpoint of improving the productivity, it is preferred to use a thermosetting resin composition that reaches a degree of curing of 80% or higher within 10 minutes at the curing temperature.

The post-curing glass transition temperature of the thermosetting resin composition constituting the skin layer, which is determined by a differential scanning calorimeter based on JIS K7121 (2012), is preferably 150°C or higher, since this allows the resulting resin molded body to have sufficient heat resistance under the use conditions. The post-curing glass transition temperature is more preferably 180°C or higher, and an upper limit thereof is not limited; however, it is sufficiently high at 300°C. It is noted here that, with regard to the post-curing glass transition temperature determined by a differential scanning calorimeter based on JIS K7121 (2012), a test piece obtained by cutting out the cured thermosetting resin composition component from the skin layer of the obtained resin molded body is measured using a differential scanning calorimeter.

From the standpoint of improving the reinforcing efficiency of the resin molded body as well as from the standpoint of allowing efficient formation of voids in the resin molded body and inhibiting production defects caused by sparseness of voids and lightweightness, it is preferred that the carbon fiber nonwoven fabric contain discontinuous carbon fibers, and that the discontinuous carbon fibers contain carbon fibers having a fiber length of 25 mm to 50 mm in a range of 1% by mass or more but less than 50% by mass, and carbon fibers having a fiber length of 0.1 mm or more but less than 25 mm in a range of more than 50% by mass. The term "fiber length" used herein means a number-average fiber length. Particularly, when the discontinuous carbon fibers contains carbon fibers having a fiber length of 25 mm to 50 mm in a range of 1% by mass or more but less than 50% by mass, the presence of relatively long fibers effectively works to improve the reinforcing efficiency of the resin molded body. When the discontinuous carbon fibers contains carbon fibers having a fiber length of 0.1 mm or more but less than 25 mm in a range of more than 50% by mass, voids can be efficiently formed inside the resin molded body during its production.

The carbon fiber nonwoven fabric is preferably composed of discontinuous carbon fibers that are dispersed in filament units of the above-described carbon fibers. In this case, gaps can be efficiently generated by the carbon fibers in the carbon fiber nonwoven fabric, so that voids can be efficiently formed during the step of adjusting the porosity in the production of a resin molded body; therefore, a lightweight resin molded body can be easily obtained. The phrase "discontinuous carbon fibers dispersed in filament units" used herein means that, in the carbon fiber nonwoven fabric, the amount of bundles in which two or more carbon fiber monofilaments are in contact and parallel to each other is less than 20%.

Particularly, the resin porous body preferably has a structure in which short carbon fibers are randomly dispersed in the in-plane direction and have contact points where they intersect with each other, and the contact points are adhered by the resin constituting the resin porous body. In this case, regions where neither the carbon fibers nor the resin constituting the resin porous body exists are continuous voids. By this, the stress generated by the pressure and the like at the time of injecting the thermosetting resin composition constituting the skin layer is transmitted and dispersed to the carbon fibers through the contact points of the carbon fibers, so that deformation of the porous structure can be inhibited. In addition, separation of the contact points of the carbon fibers due to permeation of the thermosetting resin composition constituting the skin layer can be inhibited.

In the carbon fiber nonwoven fabric, when the discontinuous carbon fibers are required to have directionality in strength and elastic modulus in terms of the design of a product formed of the resin molded body, the carbon fibers may be oriented in the desired direction; however, it is preferred that the discontinuous carbon fibers contained in the resin porous body be isotropically oriented in the in-plane direction. This is because the thermosetting resin composition selectively flows on the surface of the resin porous body during the below-described resin injection step, a beautiful skin layer can be formed on the resin porous body having continuous voids.

The property that "the discontinuous carbon fibers contained in the resin porous body are isotropically oriented in the in-plane direction" means that a tensile strength ratio (Ta/Tb) is in a range of 0.6 to 1.7 when a maximum value and a minimum value of the arithmetic mean of the tensile strength measured at n = 5 using test pieces cut out in a total of four directions, which consist of one arbitrary direction in the in-plane direction of the resin porous body that is taken as a reference direction of 0° and other directions of 45°, 90°, and -45°, are defined as Ta and Tb, respectively. When the discontinuous carbon fibers are isotropically oriented in the in-plane direction, the resin composition that is liquid can be effectively prevented from being concentrated and flowing in the direction of high tensile strength, i.e., in the oriented direction, at the time of injection. The tensile strength ratio (Ta/Tb) is more preferably 0.8 to 1.3, still more preferably 0.9 to 1.1.

The resin contained in the resin porous body may be any type of thermoplastic resin or thermosetting resin and is not limited as long as the shape of the resin porous body can be maintained; however, the resin is preferably one which does not melt at the curing temperature of the thermosetting resin composition constituting the skin layer. In other words, the resin contained in the resin porous body is preferably a thermoplastic resin whose melting point is equal to or higher than the curing temperature of the thermosetting resin composition constituting the skin layer, or a cured thermosetting resin.

Specific examples of the thermoplastic resin include: crystalline resins, for example, polyesters such as polyethylene terephthalate (PET), polybutylene terephthalate (PBT), polytrimethylene terephthalate (PTT), polyethylene naphthalate (PEN), and liquid crystal polyesters, polyolefins such as polyethylene (PE), polypropylene (PP), and polybutylene, polyoxymethylene (POM), polyamide (PA), polyarylene sulfides such as polyphenylene sulfide (PPS), polyketone (PK), polyether ketone (PEK), polyether ether ketone (PEEK), polyether ketone ketone (PEKK), polyether nitrile (PEN), fluororesins such as polytetrafluoroethylene, and liquid crystal polymers (LCP); amorphous resins, such as styrene-based resins, polycarbonate (PC), polymethyl methacrylate (PMMA), polyvinyl chloride (PVC), polyphenylene ether (PPE), polyimide (PI), polyamide imide (PAI), polyether imide (PEI), polysulfone (PSU), polyether sulfone, and polyarylate (PAR); phenolic resins; phenoxy resins; polystyrene-based, polyolefin-based, polyurethane-based, polyester-based, polyamide-based, polybutadiene-based, polyisoprene-based, fluororesin-based, and acrylonitrile-based thermoplastic elastomers; and copolymers and modified products of these resins. Thereamong, a polyolefin is desired from the standpoint of lightweightness; a polyamide is preferred from the standpoint of strength; an amorphous resin such as a polycarbonate or a styrene-based resin is preferred from the standpoint of surface appearance; a polyarylene sulfide is desired from the standpoint of heat resistance; a polyether ether ketone is preferred from the standpoint of continuous use temperature; and a fluororesin is preferably used from the standpoint of chemical resistance.

Specific examples of the thermosetting resin include unsaturated polyester resins, vinyl ester resins, epoxy resins, phenol resins, urea resins, melamine resins, polyimide resins, cyanate ester resins, bismaleimide resins, benzoxazine resins, copolymers and modified products of these resins, and resins in which at least two of these resins are blended. In order to improve the impact resistance, an elastomer or a rubber component may be added to the thermosetting resin. Among the above-exemplified resins, an epoxy resin is preferred since it is excellent in mechanical properties and heat resistance.

Moreover, from the standpoint of shape retention of the resin porous body, the resin porous body preferably has a structure in which the discontinuous carbon fibers have contact points where they intersect with each other, and the contact points are adhered by the resin constituting the resin porous body. This structure in which the contact points of the carbon fibers are adhered by the resin constituting the resin porous body means that, at overlapping parts of single or bundled carbon fibers and carbon fibers adjacent thereto, the resin constituting the resin porous body functions as an adhesive to hold the carbon fibers together, and examples of such an adhered state include a state where the contact points are covered with the resin, and a state where the resin is aggregated at the contact points. In order to efficiently immobilize the contact points of the carbon fibers and thereby improve the reinforcing efficiency of the resin molded body, the contact points are preferably in a state of being covered with the resin.

It is preferred that the skin layer be formed of a fiber-reinforced resin that contains a reinforcing fiber substrate and the thermosetting resin composition, since this enables to obtain a resin molded body that not only has excellent surface quality but also exhibits excellent mechanical properties such as bending properties by the reinforcing effect of this fiber-reinforced resin layer. In addition, high productivity is obtained since it is no longer necessary to perform the formation of such a fiber-reinforced resin layer as another step. Examples of the reinforcing fiber substrate include: fabrics containing carbon fibers; unidirectionally arranged carbon fiber bundles; carbon fiber nonwoven fabrics; and nonwoven fabrics formed of fiber species other than carbon fibers, such as fabrics formed of glass fibers or aramid fibers. The term "fabric" used herein refers to a material having a regular structure composed of continuous reinforcing fibers, and examples thereof include a plain-woven fabric, a satin-woven fabric, and a twill-woven fabric. Similarly, from the standpoint of reinforcing effect, a fiber bundle in which reinforcing fibers are unidirectionally arranged, or a unidirectional fabric in which such fiber bundles are immobilized by suture threads or the like can be preferably used as well. The term "nonwoven fabric" used herein refers to a fabric in which discontinuous reinforcing fibers are planarly arranged, and examples thereof include a chopped strand mat, a continuous strand mat, a papermaking mat, a carding mat, and an air-laid mat. A nonwoven fabric is preferred since it has high shapeability and can be arranged along the surface shape of a porous body.

It is noted here that the arrangement orientation of the reinforcing fiber substrate can be changed as appropriate in accordance with the intended purpose of, for example, providing the mechanical properties of the resin molded body with a specific directionality, or making the properties as isotropic as possible.

In the resin molded body of the present invention, not only the surface properties of the resin porous body can be improved by the skin layer, but also the resin porous body can be provided with the strength and elastic modulus of the skin layer; therefore, the resin molded body of the present invention is useful for improving the rigidity. Accordingly, the resin molded body of the present invention can be suitably used as a structural member to which bending loads are mainly applied. Particularly, the resin molded body of the present invention can be preferably used as a structural member for a flying object, such as an airplane, an artificial satellite, a UAM (Urban Air Mobility), or a drone, or as a structural member for a mobile object, such as an automobile, a railway vehicle, or a ship. Especially, the resin molded body of the present invention can be preferably used not only as a large component, but also as a structural member for a flying object or a structural member for a mobile object, in which satisfaction of both lightweightness and rigidity as well as improvement in surface properties are demanded.

Further, in the resin molded body, from the standpoint of process simplification, it is preferred that the resin porous body exist in a plural number, being arranged adjacent to one another, and that contact surfaces of the adjacently arranged resin porous bodies be bonded with the above-described thermosetting resin composition. Moreover, in the present invention, the thermosetting resin composition permeates from the skin layer into the parts where the resin molded bodies are joined together, and also permeates into the placement surface as if using an adhesive, whereby the originally separate resin porous bodies can be adhered and joined together, so that a reduction in strength can be inhibited.

### <Preform Forming Step>

In the production method of the present invention, first, a preform is formed using a resin porous body that has continuous voids and a flexural modulus of 10 MPa or more based on the ISO178 method (1993) (this resin porous body is hereinafter may be simply referred to as "porous body") (preform forming step). By using a porous body that has a flexural modulus of 10 MPa or more based on the ISO178 method (1993) and is unlikely to be deformed by an external force, the resin molded body eventually obtained can be provided with excellent mechanical properties, and it is made easier to form a large-sized preform. In addition, deformation of the resulting preform by the resin injection pressure in the resin injection step can be inhibited. The flexural modulus of the resin porous body based on the ISO178 method (1993) is preferably 50 MPa or more, more preferably 100 MPa or more.

In the preform forming step, it is also preferred to form a preform by arranging the above-described porous body in a plural number adjacent to one another. The adjacent arrangement in this case means to arrange the porous bodies in a state of being at least partially in contact with each other. By forming a preform in this manner, a thermosetting resin composition constituting a skin layer permeates to the whole preform through contact points of the porous bodies in the injection step, and the plural porous bodies are integrated by curing of the thermosetting resin composition. As a result, improvement in the mechanical properties of the resulting resin molded body and integration of the plural porous bodies are achieved at the same time by impregnation and curing of the thermosetting resin composition, so that a resin molded body having a complex shape or a large resin molded body can be obtained with high productivity.

In this case, it is more preferred to fit and fix the adjacently arranged resin porous bodies with each other. By this fitting and fixation, misalignment of the porous bodies in the injection step can be inhibited. In addition, since the thermosetting resin composition permeates to the spots where the porous bodies are fitted and fixed, the strength of the joined parts is improved by the effects of both the fitting and fixation and the integration by the thermosetting resin composition.

At the time of the preform formation, the continuous voids of the resin porous body preferably has a porosity in a range of 10% by volume to 97% by volume. When the porosity of the continuous voids is 10% by volume or higher, not only the permeation of the below-described thermosetting resin composition is facilitated, but also the lightweightness can be improved. Meanwhile, when the porosity of the continuous voids is 97% by volume or less, the porous body has sufficient mechanical properties, so that not only deformation of the preform in the step of injecting the thermosetting resin composition constituting a skin layer can be inhibited and a high-quality resin molded body can be obtained, but also the resin molded body can be provided with excellent mechanical properties.

Since the resin porous body contains continuous voids, the thermosetting resin composition easily permeates to the whole porous body through the continuous parts, so that a high-quality resin molded body in which partial impregnation defects are inhibited can be obtained with high productivity. Further, the thermosetting resin composition permeates into the continuous voids existing on the surface of the resin porous body, whereby the thermosetting resin composition and the resin porous body are firmly joined, making defects such as peeling hardly occur during use.

In the preform forming step, it is also preferred to form a preform in which a reinforcing fiber substrate is further arranged on the surface of the porous body. By this, after the injection of the thermosetting resin composition, a fiber-reinforced resin layer in which the reinforcing fiber substrate impregnated with the thermosetting resin composition is formed on the surface of the porous body, so that a resin molded body which not only has superior surface quality but also exhibits excellent mechanical properties such as bending properties by the reinforcing effect of this fiber-reinforced resin layer can be obtained. In addition, high productivity is obtained since it is no longer necessary to perform the formation of such a fiber-reinforced resin layer as another step. As the reinforcing fiber substrate, from the standpoint of ensuring the mechanical properties such as bending properties of the resulting resin molded body, it is preferred to use a fabric formed of carbon fibers.

Further, in the later step of forming a skin layer on the resin porous body, a flowability control layer, such as a porous film or sheet or a nonwoven fabric formed of organic or inorganic fibers, may be inserted to the outermost surface of the resin porous body for the purpose of controlling the flowability of the thermosetting resin composition. In the flowability control layer, pores are preferably formed for the purpose of controlling the flow of the resin, and this enables to control making the flow of the resin uniform and excessive permeation of the resin into the resin porous body. Examples of the flowability control layer include: a nonwoven fabric formed of carbon fibers or glass fibers; a nonwoven or woven fabric formed of organic fibers; and a resin film in which micropores are formed. Any of these flowability control layers can be selected in accordance with the viscosity of the thermosetting resin composition forming the skin layer and the particle size of an additive and, when the skin layer is configured to contain an additive in addition to the thermosetting resin composition, it is preferred to use a flowability control layer in which pores smaller than the particle size of the additives are formed.

### <Sealing Step>

Subsequently, a closed space in which the preform is enclosed with a molding die and/or a film is formed. In other words, the preform is sealed (sealing step). By sealing the preform, at the time of injecting the thermosetting resin composition constituting the skin layer, the thermosetting resin composition is prevented from leaking out of the system and thus can be surely injected in a prescribed amount. In the case of using a double-sided molding die, the closed space is formed by closing its upper die and lower die. Alternatively, the closed space may be formed by using only the lower die as a molding die, and covering the upper surface or the entire surface thereof with a film. This also enables the production of a large resin molded body.

### <Depressurization Step>

After the sealing step but before the below-described injection step, it is preferred to perform the depressurization step of adjusting the degree of vacuum of the thus formed closed space to be -0.08 to -0.1 MPa. By this, the injection of the thermosetting resin composition constituting the skin layer is assisted by a pressure difference between the pressure in the closed space and the atmospheric pressure, and the injection pressure of the thermosetting resin composition constituting the skin layer can be reduced; therefore, deformation and misalignment of the preform can be inhibited and the injection rate of the resin can be improved, so that a high-quality resin molded body can be obtained with high productivity. The degree of vacuum in the depressurization step is more preferably -0.09 to -0.1 MPa.

### <Injection Step>

Subsequently, the thermosetting resin composition is injected into the closed space enclosing the preform (injection step). Eventually, the thermosetting resin composition constitutes a skin layer. Since the main component of the thermosetting resin composition constituting the skin layer is a thermosetting resin, the viscosity of the thermosetting resin composition can be sufficiently reduced by temperature control and composition adjustment, so that the thermosetting resin composition later constituting the skin layer can easily permeate into the resin porous body. By this, deformation and defective impregnation of the preform in the injection step can be inhibited.

In the injection step, the thermosetting resin composition is preferably allowed to flow into the closed space enclosing the preform at a pressure of preferably 0.3 to 10 MPa, more preferably 0.3 to 5 MPa. By controlling the injection pressure to be in this range, deformation of the preform in this thermosetting resin composition injection step can be inhibited, so that a high-quality resin molded body can be obtained. As a method of adjusting the viscosity of the thermosetting resin composition to be injected, either a method of heating the thermosetting resin composition or a method of adjusting the composition ratio of the thermosetting resin composition itself may be employed.

At the time of injecting the thermosetting resin composition later constituting the skin layer, it is preferred to adjust the viscosity of the thermosetting resin composition to be 1 to 1,000 mPa·s. When the viscosity of the thermosetting resin composition is 1 mPa·s or higher, the degree of permeation into the porous body can be easily adjusted by adjusting the curing temperature and the curing time after the injection. When the viscosity of the thermosetting resin composition is 1,000 mPa·s or less, since the viscosity is sufficiently low, deformation and misalignment of the preform during the injection of the thermosetting resin composition can be inhibited, and the thermosetting resin composition is allowed to permeate in a sufficient amount. Further, the sufficiently low viscosity facilitates the permeation into the porous body. The viscosity of the thermosetting resin composition is more preferably 10 to 800 mPa·s, still more preferably 30 to 500 mPa·s.

### <Pressurization Step>

After the injection step, it is preferred to further pressurize the preform (pressurization step). By this pressurization, the thermosetting resin composition is allowed to sufficiently permeate into the preform, and the surface shape of the resulting resin molded body is transferred to the surface of the molding die and/or film, so that a resin molded body having excellent surface quality can be obtained. The pressurization time and pressure can be determined as appropriate in accordance with the state of the permeation of the thermosetting resin composition into the preform; however, from the standpoint of allowing the thermosetting resin composition to sufficiently permeate into the preform, it is preferred to perform the pressurization at a pressure of 0.5 MPa to 3 MPa. The pressurization time can be adjusted as appropriate; however, it is preferably in a range of 5 seconds to 60 seconds from the standpoint of attaining sufficient permeation of the thermosetting resin composition.

### <Curing Step>

In a state where the thermosetting resin composition has permeated into the preform, the preform is maintained at a temperature equal to or higher than the curing temperature of the thermosetting resin composition to cure the thermosetting resin composition (curing step). The thermosetting resin composition permeates into the resin porous body of the preform and is cured, as a result of which a resin molded body is formed. By sufficiently curing the thermosetting resin composition in the curing step, a change in the degree of permeation and the shape of the thermosetting resin composition after the removal of the resulting resin molded body from the molding die or film can be inhibited, so that a high-quality resin molded body can be obtained. In the curing step, the degree of curing of the thermosetting resin composition is preferably 80% or higher since this can inhibit the above-described change in shape. When the degree of curing is lower than 80%, the thermosetting resin composition constituting the resin molded body is not completely cured, and the shape may not be stable at the time of removal. The degree of curing is preferably 80% or higher from the standpoint of shape stability; however, the closer the degree of curing to 100%, the more fixed is the shape and the more preferred it is. On the other hand, an increase in the degree of curing requires to maintain the preform in the molding die for a longer period, which generally extends the molding time. Therefore, from the standpoint of productivity, a resin molded body can be obtained highly efficiently when the degree of curing is 80% or higher.

Moreover, from the standpoint of the dimensional stability of the resulting molded article, it is preferred that the curing step do not involve pressurization of the preform after the resin injection. The pressure applied in this case refers to a pressure externally applied by a molding machine, resin injection, or the like, which is not attributed to contraction or expansion of a material. Examples of a method of blocking such a pressure include, but not limited to: a method of immobilizing an upper die and a lower die in the case of using a molding die; and a method of releasing depressurization in the case of enclosing the molded article with a film.

### Examples

The present invention will now be described concretely by way of Examples. The present invention is, however, not limited to the below-described Examples.

### [Carbon Fibers]

A copolymer containing polyacrylonitrile as a main component was subjected to spinning, baking, and surface oxidation to obtain continuous carbon fibers having a total of 12,000 filaments. The thus obtained continuous carbon fibers had the following properties.
Specific gravity: 1.8
Tensile strength: 4,600 MPa
Tensile elastic modulus: 220 GPa
Tensile elongation at break: 2.1%

### [Resins Used in Resin Porous Bodies]

### • Thermosetting Resin 1

A liquid epoxy resin composition (viscosity at 25°C: 200 mPa·s), which was obtained by blending 70 parts by weight of a main agent (Ep828, manufactured by Mitsubishi Chemical Group Corporation) with 30 parts by weight of a curing agent (DENACOL EX-211, manufactured by Nagase ChemteX Corporation) and 35 parts by weight of a curing accelerator (ANCAMINE 2049, manufactured by Evonik Japan Co., Ltd.), was used as an epoxy resin.

### • Thermoplastic Resin 1

A film formed of an acid-modified polypropylene ("ADMER" (registered trademark) QB510 (manufactured by Mitsui Chemicals, Inc., melting point: 165°C)), which had an area weight of 150 g/m², was used.

### • Thermoplastic Resin 2

A film formed of a polyether ether ketone (PEEK 450G (manufactured by Victrex-MC, crystalline, melting point: 343°C, glass transition temperature: 143°C)), which had an area weight of 205 g/m², was used.

### [Thermosetting Resin Compositions Constituting Skin Layers]

### • Thermosetting Resin Composition 1

A liquid epoxy resin composition (viscosity at an injection temperature of 60°C: 100 mPa·s), which was obtained by blending 70 parts by weight of a main agent (Ep828, manufactured by Mitsubishi Chemical Group Corporation) with 30 parts by weight of a curing agent (DENACOL EX-211, manufactured by Nagase ChemteX Corporation) and 35 parts by weight of a curing accelerator (ANCAMINE 2049, manufactured by Evonik Japan Co., Ltd.), was used as an epoxy resin. A cured product of this liquid epoxy resin composition had a glass transition temperature of 165°C.

### • Thermosetting Resin Composition 2

A liquid phenol resin composition (viscosity at an injection temperature of 40°C: 150 mPa·s), which was obtained by blending 100 parts by weight of a main agent (BRL-240, manufactured by Aica Kogyo Co., Ltd.) with 12 parts by weight of a curing agent (FRH-50, manufactured by Aica Kogyo Co., Ltd.), was used as a phenol resin, was used as a phenol resin. A cured product of this liquid phenol resin composition had a glass transition temperature of 150°C.

### [Binder Resins]

### • Binder Resin 1

A polyamic acid obtained by reacting 4,4'-(4,4'-isopropylidenediphenoxy)bis(phthalic anhydride) as a tetracarboxylic dianhydride with m-phenylenediamine as a diamine compound at a molar ratio of 1:1 was neutralized with N,Ndimethyl-2-aminoethanol as a trialkylamine to obtain a polyamic acid salt.

This compound was diluted with purified water and used as an aqueous solution having a concentration of 10% by mass. It is noted here that a product obtained by reacting this binder resin 1 at 200°C for 60 minutes had a glass transition temperature of 216°C with no melting point.

### [Carbon Fiber Fabric]

Carbon fibers were parallelly aligned and unidirectionally arranged at a density of 1.2 fibers/cm to obtain a sheet-form reinforcing fiber group. Carbon fibers were also arranged at a density of 1.2 fibers/cm in the direction perpendicular to the thus obtained carbon fiber group to interlace the carbon fibers, and a bidirectional fabric substrate having a 200-g/m² plain weave structure was formed using a weaving loom.

### [Nonwoven Fabrics Formed of Carbon Fibers]

### • Carbon Fiber Nonwoven Fabric 1

Carbon fibers were cut at a length of 5 mm using a strand cutter to obtain cut carbon fibers. A dispersion composed of water and a surfactant (polyoxyethylene lauryl ether (trade name), manufactured by Nacalai Tesque, Inc.), which had a concentration of 0.1% by mass, was prepared, and a carbon fiber nonwoven fabric was produced using this dispersion and the cut carbon fibers. A production apparatus was equipped with a cylindrical container of 1,000 mm in diameter as a dispersion tank having an opening cock at the bottom, and a linear transport section (inclination angle: 30°) connecting the dispersion tank and a papermaking tank. A stirrer was attached to an opening on the upper surface of this dispersion tank, enabling to load the cut carbon fibers and the dispersion through the opening. The papermaking tank was equipped with a mesh conveyor having a papermaking surface of 500 mm in width on the bottom, and a conveyor capable of transferring the carbon fiber nonwoven fabric was connected to the mesh conveyor. Papermaking was performed at a carbon fiber concentration in the dispersion of 0.05% by mass, and the papermaking conditions were adjusted such that the carbon fibers were dispersed in the form of filaments and isotropically in the in-plane direction. The resulting papermade carbon fiber nonwoven fabric was dried in a 200°C drying furnace for 30 minutes. The thus obtained mat had an area weight of 150 g/m². The binder resin 1 was applied to this mat, which was then dried again in a 200°C drying furnace for 60 minutes to obtain a carbon fiber nonwoven fabric 1. In this carbon fiber nonwoven fabric 1, carbon fibers in single filament units and 100 carbon fiber bundles were randomly dispersed in an amount of 99% by mass and 1% by mass, respectively.

### • Carbon Fiber Nonwoven Fabric 2

A carbon fiber nonwoven fabric was produced using the same carbon fibers as in the carbon fiber nonwoven fabric 1. In this production, the angle of the papermaking tank was adjusted such that the fibers were oriented with the papermaking direction in the in-plane direction. The binder resin 1 was applied to this carbon fiber nonwoven fabric, which was then dried again in a 200°C drying furnace for 60 minutes to obtain a carbon fiber nonwoven fabric 2. In this carbon fiber nonwoven fabric 2, carbon fibers in single filament units and 100 carbon fiber bundles were randomly dispersed in an amount of 99% by mass and 1% by mass, respectively.

### • Carbon Fiber Nonwoven Fabric 3

Carbon fibers cut to a length of 5 mm and carbon fibers cut to a length of 30 mm were prepared. These two kinds of carbon fibers of different lengths were mixed in advance at a weight ratio of 90% by mass of the 5-mm carbon fibers and 10% by mass of 30-mm carbon fibers. A carbon fiber nonwoven fabric was produced using the thus mixed carbon fibers. In the production, the concentration of the carbon fibers was adjusted to be 0.15% by mass such that the carbon fibers were bundled. The binder resin 1 was applied to the carbon fiber nonwoven fabric, which was then dried again in a 200°C drying furnace for 60 minutes to obtain a carbon fiber nonwoven fabric 3. In this carbon fiber nonwoven fabric 3, the carbon fibers remained in bundles of 200 fibers; however, they were randomly dispersed.

### [Resin Porous Bodies]

### • Resin Porous Body 1

A laminate obtained by alternately disposing the thermoplastic resin 1 (46 sheets) and the carbon fiber nonwoven fabric 1 (23 sheets) was placed in the cavity of a compression molding die preheated to 200°C, and the die was closed. Subsequently, this die was maintained for 120 seconds, and further maintained for 60 seconds while applying a pressure of 5 MPa thereto. Then, the cavity of the die was opened, and a metal spacer was inserted to an end of the cavity so as to adjust the thickness of the resulting resin porous body 1 and thereby adjust the porosity to be 65% by volume. Thereafter, the cavity of the die was closed again, and the cavity temperature was cooled to 50°C with the pressure being maintained, after which the die was opened and the resin porous body 1 was removed. The thus obtained resin porous body 1 had a porosity of 65% by volume, a thickness of 30 mm, and a flexural modulus of 3,600 MPa.

### • Resin Porous Body 2

The thermosetting resin composition 1 in an amount of 415 g was applied to the top of a single carbon fiber nonwoven fabric 1, which was then prepared into 23 sheets. A laminate obtained by alternately disposing these sheets was placed in the cavity of a compression molding die preheated to 180°C, and the die was closed. Subsequently, this die was maintained for 10 seconds, and further maintained for 10 seconds while applying a pressure of 3 MPa thereto. Then, the cavity of the die was opened, and a metal spacer was inserted to an end of the cavity so as to adjust the thickness of the resulting resin porous body 2 and thereby adjust the porosity to be 65% by volume. Thereafter, the cavity of the die was closed again, and the resin porous body 2 was allowed to cure for 600 seconds with the pressure being maintained, after which the die was opened and the resin porous body 2 was removed. The thus obtained resin porous body 2 had a porosity of 65% by volume, a thickness of 30 mm, and a flexural modulus of 3,700 MPa.

### • Resin Porous Body 3

A laminate obtained by alternately disposing the thermoplastic resin 2 (46 sheets) and the carbon fiber nonwoven fabric 1 (23 sheets) was placed in the cavity of a compression molding die preheated to 380°C, and the die was closed. Subsequently, this die was maintained for 120 seconds, and further maintained for 60 seconds while applying a pressure of 5 MPa thereto. Then, the cavity of the die was opened, and a metal spacer was inserted to an end of the cavity so as to adjust the thickness of the resulting resin porous body 3 and thereby adjust the porosity to be 65% by volume. Thereafter, the cavity of the die was closed again, and the cavity temperature was cooled to 50°C with the pressure being maintained, after which the die was opened and the resin porous body 3 was removed. The thus obtained resin porous body 3 had a porosity of 65% by volume, a thickness of 30 mm, and a flexural modulus of 4,000 MPa.

### • Resin Porous Body 4

A laminate obtained by alternately disposing the thermoplastic resin 2 (30 sheets) and the carbon fiber nonwoven fabric 1 (15 sheets) was placed in the cavity of a compression molding die preheated to 380°C, and the die was closed. Subsequently, this die was maintained for 120 seconds, and further maintained for 60 seconds while applying a pressure of 5 MPa thereto. Then, the cavity of the die was opened, and a metal spacer was inserted to an end of the cavity so as to adjust the thickness of the resulting resin porous body 4 and thereby adjust the porosity to be 65% by volume. Thereafter, the cavity of the die was closed again, and the cavity temperature was cooled to 50°C with the pressure being maintained, after which the die was opened and the resin porous body 4 was removed. The thus obtained resin porous body 4 had a porosity of 80% by volume, a thickness of 30 mm, and a flexural modulus of 2,500 MPa.

### • Resin Porous Body 5

A laminate obtained by alternately disposing the thermoplastic resin 1 (46 sheets) and the carbon fiber nonwoven fabric 2 (23 sheets) was placed in the cavity of a compression molding die preheated to 200°C, and the die was closed. Subsequently, this die was maintained for 120 seconds, and further maintained for 60 seconds while applying a pressure of 5 MPa thereto. Then, the cavity of the die was opened, and a metal spacer was inserted to an end of the cavity so as to adjust the thickness of the resulting resin porous body 5 and thereby adjust the porosity to be 65% by volume. Thereafter, the cavity of the die was closed again, and the cavity temperature was cooled to 50°C with the pressure being maintained, after which the die was opened and the resin porous body 5 was removed. The thus obtained resin porous body 5 had a porosity of 65% by volume and a thickness of 30 mm. The resin porous body 5 had a flexural modulus of 4,000 MPa in the orientation direction and 2,000 MPa in the direction perpendicular to the orientation direction. The lower value of 2,000 MPa was used as a representative value of the flexural modulus.

### • Resin Porous Body 6

A laminate obtained by alternately disposing the thermoplastic resin 1 (46 sheets) and the carbon fiber nonwoven fabric 3 (23 sheets) was placed in the cavity of a compression molding die preheated to 200°C, and the die was closed. Subsequently, this die was maintained for 120 seconds, and further maintained for 60 seconds while applying a pressure of 5 MPa thereto. Then, the cavity of the die was opened, and a metal spacer was inserted to an end of the cavity so as to adjust the thickness of the resulting resin porous body 6 and thereby adjust the porosity to be 65% by volume. Thereafter, the cavity of the die was closed again, and the cavity temperature was cooled to 50°C with the pressure being maintained, after which the die was opened and the resin porous body 6 was removed. The thus obtained resin porous body 6 had a porosity of 65% by volume, a thickness of 30 mm, and a flexural modulus of 4,000 MPa.

### • Resin Porous Body 7

A closed-cell polyethylene foam (flexural modulus: 75 MPa, porosity: 50% by volume, thickness: 30 mm) was used.

### • Resin Porous Body 8

An open-cell polyethylene foam (flexural modulus: 0.3 MPa, porosity: 96% by volume, thickness: 30 mm) was used.

### [Melting Point or Glass Transition Temperature]

The melting point was evaluated using a differential scanning calorimeter (DSC). A sealable sample container was filled with 5 mg of a sample and then heated from 30°C to 400°C at a heating rate of 10°C/min to perform the evaluation. As an evaluation device, PYRISL DSC manufactured by PerkinElmer Co., Ltd. was used. For a sample whose melting point was difficult to evaluate (a sample having no melting point), the glass transition temperature was measured in accordance with JIS K7121 (2012).

### [Embedded Depth of Thermosetting Resin Composition Constituting Skin Layer]

A resin molded body of interest was cut out at a size of 10 mm in length and 10 mm in width and the cut surface was polished to obtain a test piece. In this test piece, the interface of the thermosetting resin composition constituting the skin layer and a resin porous layer was observed under a light microscope, and 10 arbitrary spots were photographed at a magnification of ×200. In the thus obtained image, the embedded thermosetting resin composition is observed to have a shape with plural recesses and protrusions. In this irregular shape, the vertical difference between the deepest recess and the highest protrusion is defined as dmax, while the vertical difference between the shallowest recess and the lowest protrusion is defined as dmin. An average value of dmax and dmin is defined as the embedded depth in the present invention. A sum of dmax and dmin that were measured in the image was divided by the number of measurements, 10, and the thus obtained value was taken as the embedded depth of the thermosetting resin composition.

### (Example 1)

A resin molded body was produced by the following procedure.

### (1) Preform Forming Step

A single sheet of the resin porous body 1, which was processed into a size of 990 mm in length, 490 mm in width, and 30 mm in thickness, was loaded to a steel die consisting of an upper die and a lower die, whose cavity had a planar shape of 1,000 mm in length, 500 mm in width, and 50 mm in vertical wall height. In this process, a carbon fiber fabric was wrapped around the resin porous body 1 once, and the parts where the carbon fiber fabric 1 was in contact with the metal surface of the die was covered with a mold release sheet to form a preform. It is noted here that an injection port for injecting a liquid resin was attached to the die.

### (2) Sealing Step

The preform was enclosed with the upper die paired with the lower die, a metal spacer for thickness adjustment was arranged in an end portion of the die that was not in contact with the carbon fiber nonwoven fabric 1, and the cavity thickness was set at 31 mm. The upper die and the lower die were fastened together with bolts provided thereon in advance. Thereafter, as the depressurization step, the pressure was reduced using a vacuum pump until the degree of vacuum in the preform was -0.9 MPa.

### (3) Injection Step

The thermosetting resin composition 1 was injected using a liquid resin injector at a discharge pressure of 1 MPa.

### (4) Preform Pressurization Step

After the injection step, a load was applied to the upper surface of the preform at a surface pressure of 0.1 MPa using a press machine, and the preform was left to stand for 1 minute to allow an injected thermosetting resin to uniformly permeate into the preform.

### (5) Curing Step

A rubber heater was placed on the periphery and the upper surface of the die, and the die was heated to cure the thermosetting resin composition 1. The rubber heater was set at 150°C, and the preform loading time was 100 minutes.

### (6) Removal Step

The rubber heater was taken away from the die, and the upper die and the lower die were released to remove a resin molded body. The thus removed resin molded body had a thickness of 31 mm, and the porosity of the continuous voids of the resin porous body was 63% by volume. Further, as a result of observing the outer appearance, a resin molded body in which the thermosetting resin composition 1 formed a skin layer. When the resin molded body was cut in the thickness direction using a band saw, peeling of the skin layer from the resin porous body in the resin molded body was not observed. The embedded depth of the thermosetting resin composition constituting the skin layer in the resin molded body, which was determined by observation of a cross-section of the resin molded body, was 250 µm.

### (Example 2)

A resin molded body was obtained by the same steps as in Example 1, except that: the thermosetting resin composition 2 was used in place of the thermosetting resin composition 1; the resin porous body 2 was used in place of the resin porous body 1; the die heating temperature in the curing step was set at 80°C; and the preform loading time was changed to 60 minutes. The thus obtained resin molded body had a thickness of 31 mm, and the porosity of the continuous voids of the resin porous body was 63% by volume. Further, as a result of observing the outer appearance, it was found that the thermosetting resin composition 2 formed a skin layer in the thus obtained resin molded body. When the resin molded body was cut in the thickness direction using a band saw, peeling of the skin layer from the resin porous body in the resin molded body was not observed. The embedded depth of the thermosetting resin composition constituting the skin layer in the resin molded body, which was determined by observation of a cross-section of the resin molded body, was 250 µm.

### (Example 3)

A resin molded body was obtained by the same steps as in Example 1, except that: the resin porous body 4 was used in place of the resin porous body 1; the die heating temperature in the curing step was set at 80°C; and the preform loading time was changed to 60 minutes. The thus obtained resin molded body had a thickness of 31 mm, and the porosity of the continuous voids of the resin porous body was 63% by volume. Further, as a result of observing the outer appearance, it was found that the thermosetting resin composition 2 formed a skin layer in the thus obtained resin molded body. When the resin molded body was cut in the thickness direction using a band saw, peeling of the skin layer from the resin porous body in the resin molded body was not observed. The embedded depth of the thermosetting resin composition constituting the skin layer in the resin molded body, which was determined by observation of a cross-section of the resin molded body, was 160 µm.

### (Example 4)

Using two sheets of the resin porous bodies 1 cut into a size of 500 mm × 500 mm, the edges thereof were cut to form three uneven shapes of 25 mm in length and 25 mm in width at equal intervals in the in-plane direction such that the two sheets could be fitted together. The cut resin porous bodies 1 were fitted together to form a preform. Except these operations, a fiber-reinforced resin molded body was obtained by the same steps as in Example 1. The thus obtained resin molded body had a thickness of 31 mm, and the porosity of the continuous voids of the resin porous body was 60% by volume. As a result of observing the outer appearance, it was found that the thermosetting resin composition 1 formed a skin layer in the thus obtained resin molded body. Further, it was found that the thermosetting resin composition 1 permeated into the fitted parts, forming extremely strong joints. When this resin molded body was cut in the thickness direction using a band saw, peeling of the skin layer from the resin porous body in the resin molded body was not observed. The embedded depth of the thermosetting resin composition constituting the skin layer in the resin molded body, which was determined by observation of a cross-section of the resin molded body, was 255 µm.

### (Example 5)

A fiber-reinforced resin molded body was obtained by the same steps as in Example 1, except that the resin porous body 5 was used in place of the resin porous body 1. The thus obtained resin molded body had a thickness of 31 mm, and the porosity of the continuous voids of the resin porous body was 65% by volume. As a result of observing the outer appearance, it was found that the thermosetting resin composition 1 formed a skin layer in the thus obtained resin molded body; however, the skin layer was observed to have uneven shapes on the edges in the direction perpendicular to the fiber orientation direction of the resin porous body 5. This was believed to be caused by the difficulty of the thermosetting resin composition 1 to flow in the direction perpendicular to the fiber orientation direction, which resulted in a reduced amount. When this resin molded body was cut in the thickness direction using a band saw, peeling of the skin layer from the resin porous body in the resin molded body was not observed, and the resin molded body was thus believed to be usable by cutting off the uneven parts. The embedded depth of the thermosetting resin composition constituting the skin layer in the resin molded body, which was determined by observation of a cross-section of the resin molded body, was 300 µm.

### (Example 6)

A resin molded body was obtained by the same steps as in Example 1, except that the resin porous body 6 was used in place of the resin porous body 1. The thus obtained resin molded body had a thickness of 31 mm, and the porosity of the continuous voids of the resin porous body was 55% by volume. As a result of observing the outer appearance, it was found that the thermosetting resin composition 1 formed a skin layer in the thus obtained resin molded body. When this resin molded body was cut in the thickness direction using a band saw, peeling of the skin layer from the resin porous body in the resin molded body was not observed; however, it was found that, due to the effect of the fiber bundles of the resin porous body 6, the thermosetting resin composition 1 permeated deeply from the surface of the resin porous body 6 inside the resin molded body. This was believed to be caused by an increase in the size of the voids due to a large number of fiber bundles, which facilitated the permeation of the thermosetting resin composition 1, and it was believed that the porosity of the continuous voids of the resin porous body was consequently reduced; however, it was within a usable range. The embedded depth of the thermosetting resin composition constituting the skin layer in the resin molded body, which was determined by observation of a cross-section of the resin molded body, was 500 µm.

### (Example 7)

A resin molded body was obtained by the same steps as in Example 1, except that the resin porous body 3 was used in place of the resin porous body 1. The thus obtained resin molded body had a thickness of 31 mm, and the porosity of the continuous voids of the resin porous body was 63% by volume. As a result of observing the outer appearance, it was found that the thermosetting resin composition 1 formed a skin layer in the thus obtained resin molded body; however, the skin layer was observed to have moderate inclination. Further, when this resin molded body was cut in the thickness direction using a band saw, peeling of the skin layer from the resin porous body in the resin molded body was not observed. The embedded depth of the thermosetting resin composition constituting the skin layer in the resin molded body, which was determined by observation of a cross-section of the resin molded body, was 100 µm; however, the embedded depth was small in those parts where carbon fiber bundles existed at the interface of the resin porous body with the skin layer. Therefore, the skin layer was likely to be easily peeled off from the resin porous body immediately above the bundles.

### (Example 8)

In the preform forming step, a preform was produced by wrapping the carbon fiber fabric around the resin porous body 1 once. A resin molded body was obtained by the same steps as in Example 1, except that the subsequent steps were performed without performing the preform pressurization step. The thus obtained resin molded body had a thickness of 31 mm, and the porosity of the continuous voids of the resin porous body was 63% by volume. As a result of observing the outer appearance, it was found that the thermosetting resin composition 1 permeated into the carbon fiber fabric and formed a skin layer in the thus obtained resin molded body; however, the skin layer was observed to have moderate inclination. Further, when this resin molded body was cut in the thickness direction using a band saw, peeling of the skin layer from the resin porous body in the resin molded body was not observed. The embedded depth of the thermosetting resin composition constituting the skin layer in the resin molded body, which was determined by observation of a cross-section of the resin molded body, was 100 µm.

### (Example 9)

A resin molded body was obtained by the same steps as in Example 1, except that a preform was produced without wrapping the carbon fiber fabric around the resin porous body 1 in the preform forming step. The thus obtained resin molded body had a thickness of 31 mm, and the porosity of the continuous voids of the resin porous body was 65% by volume. Further, as a result of observing the outer appearance, it was found that the thermosetting resin composition 1 permeated into the carbon fiber fabric and formed a skin layer in the thus obtained resin molded body, and that the resin porous body had a beautiful skin layer without inclination, which was different from Example 8. When this resin molded body was cut in the thickness direction using a band saw, peeling of the skin layer from the resin porous body in the resin molded body was not observed. The embedded depth of the thermosetting resin composition constituting the skin layer in the resin molded body, which was determined by observation of a cross-section of the resin molded body, was 300 µm.

### (Example 10)

A resin molded body was obtained by the same steps as in Example 1, except that the die temperature in the curing step was set at 180°C. In the thus obtained resin molded body, the porosity of the continuous voids of the resin porous body was 40% by volume, and the thickness was 15 mm. As a result of observing the outer appearance, it was found that a skin layer made of the thermosetting resin composition 1 was formed on the surface of the resin porous body 1. When this resin molded body was cut in the thickness direction using a band saw, it was found that the thermoplastic resin on the skin layer side of the resin porous body 1 was melted and the voids were in a collapsed state. It is noted here that peeling of the skin layer from the resin porous body was not observed. The embedded depth of the thermosetting resin composition constituting the skin layer in the resin molded body, which was determined by observation of a cross-section of the resin molded body, was 60 µm; however, the thermosetting resin composition constituting the skin layer was not embedded in those parts where the resin in the resin porous body was melted, and the skin layer was likely to be easily peeled off from the resin porous body immediately above these parts.

### (Comparative Example 1)

A resin molded body was obtained by the same steps as in Example 1, except that the resin porous body 7 was used in place of the resin porous body 1. The thus obtained resin molded body had a thickness of 31 mm, and the porosity of the continuous voids of the resin porous body was 50% by volume. Further, as a result of observing the outer appearance, it was found that the thermosetting resin composition 1 formed a skin layer in the thus obtained resin molded body; however, when this resin molded body was cut in the thickness direction using a band saw, the skin layer was easily peeled off from the resin porous body in the resin molded body. When the cut surface was observed, the embedded depth of the thermosetting resin composition 1 constituting the skin layer into the voids of the resin porous body was found to be extremely small, and the embedded depth of the thermosetting resin composition constituting the skin layer in the resin molded body, which was determined by observation of a cross-section of the resin molded body, was 10 µm. This is believed to be because the thermosetting resin composition 1 was blocked by the cell walls of the closed-cell foam.

### (Comparative Example 2)

A resin molded body was obtained by the same steps as in Example 1, except that, in the preform forming step, a preform was produced by wrapping the carbon fiber fabric around the resin porous body 7 once. The thus obtained resin molded body had a thickness of 33 mm, and the porosity of the continuous voids of the resin porous body was 50% by volume. Further, as a result of observing the outer appearance, it was found that the thermosetting resin composition 1 impregnated into the carbon fiber fabric formed a skin layer in the thus obtained resin molded body; however, when this resin molded body was cut in the thickness direction using a band saw, the skin layer was easily peeled off from the resin porous body in the resin molded body. When the cut surface was observed, the embedded depth of the thermosetting resin composition 1 constituting the skin layer into the voids of the resin porous body was found to be extremely small, and the embedded depth of the thermosetting resin composition constituting the skin layer in the resin molded body, which was determined by observation of a cross-section of the resin molded body, was 10 µm. This is believed to be because the thermosetting resin composition 1 was blocked by the cell walls of the closed-cell foam.

### (Comparative Example 3)

A resin molded body was obtained by the same steps as in Example 1, except that, in the preform forming step, a preform was produced by wrapping the carbon fiber fabric around the resin porous body 8 once. The thus obtained resin molded body had a thickness of 2 mm, and the porosity of the continuous voids of the resin porous body was 5% by volume. It is believed that, because of the use of the resin porous body 8 having a low flexural modulus, the resin porous body collapsed due to the pressure in the injection step and the pressurization step and was unable to maintain its shape. The embedded depth of the thermosetting resin composition constituting the skin layer in the resin molded body, which would be measured by observation of a cross-section of the resin molded body, was not determined.

**[Table 1]**

| | Unit | Example 1 | Example 2 | Example 3 | Example 4 | Example 5 | Example 6 | Example 7 |
|---|---|---|---|---|---|---|---|---|
| Type of Resin Porous Body | | Resin Porous Body | Resin Porous Body | Resin Porous Body | Resin Porous Body | Resin Porous Body | Resin Porous Body | Resin Porous Body |
| Carbon Fiber Nonwoven Fabric in Resin Porous Body | | Carbon Fiber Nonwoven Fabric 1 | Carbon Fiber Nonwoven Fabric 1 | Carbon Fiber Nonwoven Fabric 1 | Carbon Fiber Nonwoven Fabric 1 | Carbon Fiber Nonwoven Fabric 2 | Carbon Fiber Nonwoven Fabric 3 | Carbon Fiber Nonwoven Fabric 1 |
| Content of Carbon Fiber having 25-50 mm Length in Nonwoven Fabric | [Mass%] | 0 | 0 | 0 | 0 | 1 | 10 | 0 |
| Content of Carbon Fiber having 0.1-25 mm Length in Nonwoven Fabric | [Mass%] | 100 | 100 | 100 | 100 | 99 | 90 | 100 |
| Whether Nonwoven Fabric is composed of Discontinuous Carbon Fibres Disperced in Filament Units | | Disperced in Filament Units | Disperced in Filament Units | Disperced in Filament Units | Disperced in Filament Units | No^{note1)} | No^{Note2)} | Disperced in Filament Units |
| Resin in Resin Porous Body | | Thermoplastic Resin 1 | Thermosetting Resin 1 | Thermoplastic Resin 2 | Thermoplastic Resin 1 | Thermoplastic Resin 1 | Thermoplastic Resin 1 | Thermoplastic Resin 2 |
| Orientation Direction of Discontinuous Carbon Fibers in Resin Porous Body | | Isotropic in In-Plane Direction | Isotropic in In-Plane Direction | Isotropic in In-Plane Direction | Isotropic in In-Plane Direction | Oriented in Papermaking | Isotropic in In-Plane Direction | Isotropic in In-Plane Direction |
| Wether Resin Porous Body contains a Resin that does not melt at the Curing Temperature of the thermosetting Resin Composition | | Included | Included | Included | Included | Included | Included | Included |
| Whether Contact Points where the Discontinuous Carbon Fibers intersect with each other are Adhered by the Resin in the Resin Porous Body | | Adhered by the Resin | Adhered by the Resin | Adhered by the Resin | Adhered by the Resin | Adhered by the Resin | Adhered by the Resin | Adhered by the Resin |
| Wether Skin Layer contains a Reinforcing Carbon Fiber Substrate | | Included | Included | Included | Included | Included | Included | Included |
| Porosity of Continuous voids in Resin Porous Body | [Vol%] | 65 | 65 | 65 | 65 | 65 | 65 | 65 |
| Thickness of Resin Porous Body | [mm] | 30 | 30 | 30 | 30 | 30 | 30 | 30 |
| Flexural Modulus of Resin Porous Body | [MPa] | 3,600 | 3,700 | 2,500 | 3,600 | 2,000 | 4,000 | 4,000 |
| Binder Resin in Carbon Fiber Nonwoven Fabric | | Binder Resin 1 | Binder Resin 1 | Binder Resin 1 | Binder Resin 1 | Binder Resin 1 | Binder Resin 1 | Binder Resin 1 |
| Carbon Fiber Woven Fabric | | Used | Used | Used | Used | Used | Used | Used |
| Type of Thermosetting Resin Composition | | Thermosetting Resin 1 | Thermosetting Resin 2 | Thermosetting Resin 1 | Thermosetting Resin 1 | Thermosetting Resin 1 | Thermosetting Resin 1 | Thermosetting Resin 1 |
| Curing Temperature of Thermosetting Resin Composition | [°C] | 150 | 80 | 80 | 150 | 150 | 150 | 150 |
| Curing Time of Thermosetting Resin Composition | [min] | 100 | 60 | 60 | 100 | 100 | 100 | 100 |
| Viscosity of Thermosetting Resin during Iniection | [mPa·s] | 100 | 150 | 100 | 100 | 100 | 100 | 100 |
| Degree of Curing of Thermosetting Resin Composition at Curing Temperature | [%] | 90 | 90 | 90 | 90 | 90 | 90 | 90 |
| Post-curing Glass transition temperature of Thermosetting Resin composition | [°C] | 165 | 150 | 165 | 165 | 165 | 165 | 165 |
| Reduced Pressure Condition at Sealina Step | [Mpa] | -0.9 | -0.9 | -0.9 | -0.9 | -0.9 | -0.9 | -0.9 |
| Pressure Condition at Pressurization Step | [Mpa] | 0.1 | 0.1 | 0.1 | 0.1 | 0.1 | 0.1 | 0.1 |
| Thickness of Fiber Reinforced Resin Molded Body | [mm] | 31 | 31 | 31 | 31 | 31 | 31 | 31 |
| Porosity of Continuous Voids in Fiber Reinforced Resin Molded Article | [Vol%] | 63 | 63 | 63 | 60 | 65 | 55 | 63 |
| Embedded Depth of Thermosetting Resin Composition | [µm] | 250 | 250 | 250 | 255 | 300 | 500 | 100 |
| Outer Appearance of Fiber Reinforced Resin Molded Body | | Good | Good | Good | Good | Fair | Fair | Fair |
| ^{Note 1)}1 Mass% of Bundles of 100 Strands was Included. ^{Note 2)} 8 Mass % of Bundles of 100 Strands was Included. | | | | | | | | |

**[Table 2]**

| | Unit | Example 8 | Example 9 | Example 10 | Comparative Example 1 | Comparative Example 2 | Comparative Example 3 |
|---|---|---|---|---|---|---|---|
| Type of Resin Porous Body | | Resin Porous Body | Resin Porous Body | Resin Porous Body | Resin Porous Body | Resin Porous Body | Resin Porous Body |
| Carbon Fiber Nonwoven Fabric in Resin Porous Body | | Carbon Fiber Nonwoven Fabric 1 | Carbon Fiber Nonwoven Fabric 1 | Carbon Fiber Nonwoven Fabric 1 | - | - | - |
| Content of Carbon Fiber having 25-50 mm Length in Nonwoven Fabric | [Mass%] | 0 | 0 | 0 | - | - | - |
| Content of Carbon Fiber having 0.1-25 mm Length in Nonwoven Fabric | [Mass%] | 100 | 100 | 100 | - | - | - |
| Whether Nonwoven Fabric is composed of Discontinuous Carbon Fibres Disperced in Filament Units | | Disperced in Filament Units | Disperced in Filament Units | Disperced in Filament Units | - | - | - |
| Resin in Resin Porous Body | | Thermoplastic Resin 1 | Thermoplastic Resin 1 | Thermoplastic Resin 1 | Closed Pore Polyethylene | Closed Pore Polyethylene | Closed Pore Polyethylene |
| Orientation Direction of Discontinuous Carbon Fibers in Resin Porous Body | | Isotropic in In-Plane Direction | Isotropic in In-Plane Direction | Isotropic in In-Plane Direction | - | - | - |
| Wether Resin Porous Body contains a Resin that does not melt at the Curing Temperature of the thermosetting Resin Composition | | Included | Included | Not Included | Not Included | Not Included | Not Included |
| Whether Contact Points where the Discontinuous Carbon Fibers intersect with each other are Adhered by the Resin in the Resin Porous Body | | Adhered by the Resin | Adhered by the Resin | Adhered by the Resin | Not Adhered by the Resin | Not Adhered by the Resin | Not Adhered by the Resin |
| Wether Skin Layer contains a Reinforcing Carbon Fiber Substrate | | Included | Included | Included | Not Included | Not Included | Not Included |
| Porosity of Continuous voids in Resin Porous Body | [Vol%] | 65 | 65 | 65 | (50) | (50) | 96 |
| Thickness of Resin Porous Body | [mm] | 30 | 30 | 30 | 30 | 30 | 30 |
| Flexural Modulus of Resin Porous Body | [MPa] | 3,600 | 3,600 | 3,600 | 75 | 75 | 0.3 |
| Binder Resin in Carbon Fiber Nonwoven Fabric | | Binder Resin 1 | Binder Resin 1 | Binder Resin 1 | - | - | - |
| Carbon Fiber Woven Fabric | | Used | Not Used | Used | - | Used | Used |
| Type of Thermosetting Resin Composition | | Thermosetting Resin 1 | Thermosetting Resin 2 | Thermosetting Resin 1 | Thermosetting Resin 1 | Thermosetting Resin 1 | Thermosetting Resin 1 |
| Curing Temperature of Thermosetting Resin Composition | [°C] | 150 | 150 | 180 | 150 | 150 | 150 |
| Curing Time of Thermoseffing Resin Composition | [min] | 100 | 100 | 100 | 100 | 100 | 100 |
| Viscosity of Thermosetting Resin during Iniection | [mPa·s] | 100 | 100 | 100 | 100 | 100 | 100 |
| Degree of Curing of Thermosetting Resin Composition at Curing Temperature | [%] | 90 | 90 | 90 | 90 | 90 | 90 |
| Post-curing Glass transition temperature of Thermosetting Resin composition | [°C] | 165 | 165 | 165 | 165 | 165 | 165 |
| Reduced Pressure Condition at Sealina Step | [Mpa] | -0.9 | -0.9 | -0.9 | -0.9 | -0.9 | -0.9 |
| Pressure Condition at Pressurization Step | [Mpa] | - | 0.1 | 0.1 | 0.1 | 0.1 | 0.1 |
| Thickness of Fiber Reinforced Resin Molded Body | [mm] | 31 | 31 | 15 | 31 | 33 | 2 |
| Porosity of Continuous Voids in Fiber Reinforced Resin Molded Article | [Vol%] | 63 | 65 | 40 | 50 | 50 | 5 |
| Embedded Depth of Thermosetting Resin Composition | [µm] | 100 | 300 | 60 | 10 | 10 | - |
| Outer Appearance of Fiber Reinforced Resin Molded Body | | Fair | Fair | Fair | Failure | Failure | Failure |

### Industrial Applicability

The resin molded body of the present invention can be utilized in many fields, including: members and interior materials of aircrafts such as airplanes, artificial satellites, UAMs (Urban Air Mobilities), and drones, in which the resin molded body is used as a structural member of these flying objects that requires a large size, lightweightness, and rigidity; members and interior materials of automobiles, railway vehicles, and ships, in which the resin molded body is used as a structural member of these mobile objects; civil engineering and construction members; windmill members; members for sporting goods; and computer members.

## Claims

1. A resin molded body, comprising:
a resin porous body that contains a carbon fiber nonwoven fabric and has continuous voids; and
a skin layer formed of a thermosetting resin composition,
wherein
the continuous voids have a porosity of 50% by volume to 97% by volume,
the skin layer has a porosity of 5% by volume or less, and
the thermosetting resin composition is embedded at a depth of 50 µm to 1,000 µm on the resin porous body side of the resin molded body.

2. The fiber-reinforced resin molded body according to claim 1, wherein the thermosetting resin composition has a post-curing glass transition temperature of 150°C or higher as measured by a differential scanning calorimeter based on JIS K7121 (2012).

3. The resin molded body according to claim 1 or 2, wherein
the carbon fiber nonwoven fabric contains discontinuous carbon fibers, and
the discontinuous carbon fibers contain carbon fibers having a fiber length of 25 mm to 50 mm in a range of 1% by mass or more but less than 50% by mass, and carbon fibers having a fiber length of 0.1 mm or more but less than 25 mm in a range of more than 50% by mass.

4. The resin molded body according to any one of claims 1 to 3, wherein the carbon fiber nonwoven fabric is composed of discontinuous carbon fibers dispersed in filament units.

5. The resin molded body according to claim 3 or 4, wherein the discontinuous carbon fibers contained in the resin porous body are isotropically oriented in the in-plane direction.

6. The resin molded body according to any one of claims 1 to 5, wherein the resin porous body contains a resin that does not melt at a curing temperature of the thermosetting resin composition.

7. The resin molded body according to any one of claims 3 to 5, wherein the resin porous body has a structure in which the discontinuous carbon fibers have contact points where they intersect with each other, and the contact points are adhered by the resin constituting the resin porous body.

8. The resin molded body according to any one of claims 1 to 7, wherein the skin layer is formed of a fiber-reinforced resin composition that contains a reinforcing fiber substrate and the thermosetting resin composition.

9. The resin molded body according to any one of claims 1 to 8, wherein the thermosetting resin composition contains at least one thermosetting resin selected from the group consisting of epoxy resins, phenol resins, unsaturated polyester resins, vinyl ester resins, and urethane resins.

10. The resin molded body according to any one of claims 1 to 9, wherein
the resin porous body exists in a plural number, being arranged adjacent to one another, and
contact surfaces of the adjacently arranged resin porous bodies are bonded with the thermosetting resin composition.

11. A structural member comprising the resin molded body according to any one of claims 1 to 10, to which a bending load is mainly applied.

12. A structural member for a mobile object, comprising the structural member according to claim 11.

13. A structural member for a flying object, comprising the structural member according to claim 11.

14. A method of producing a resin molded body, the method comprising, in the order mentioned:
the preform forming step of forming a preform using a resin porous body that has continuous voids and a flexural modulus of 10 MPa or more based on the ISO178 method (1993);
the sealing step of forming a closed space that encloses the preform with a molding die and/or a film;
the injection step of injecting a thermosetting resin composition into the closed space; and
the curing step of maintaining a temperature equal to or higher than a curing temperature of the resin composition containing a thermosetting resin as a main component.

15. The method of producing a resin molded body according to claim 14, wherein the resin porous body contains a resin that does not melt at the curing temperature of the thermosetting resin composition.

16. The method of producing a resin molded body according to claim 14 or 15, wherein the continuous voids of the resin porous body have a porosity of 10% by volume to 97% by volume.

17. The method of producing a resin molded body according to any one of claims 14 to 16, further comprising the pressurization step of pressurizing the preform after the injection step but before the curing step.

18. The method of producing a resin molded body according to any one of claims 14 to 16, wherein the curing step does not involve pressurization of the preform.

19. The method of producing a resin molded body according to any one of claims 14 to 16, wherein, in the preform forming step, the preform is formed by arranging the resin porous body in a plural number adjacent to one another.

20. The method of producing a resin molded body according to claim 19, wherein, in the preform forming step, the adjacently arranged resin porous bodies are fitted and fixed to each other.

21. The method of producing a resin molded body according to any one of claims 14 to 16, wherein, in the preform forming step, a preform in which a reinforcing fiber substrate is further arranged on the surface of the resin porous body is formed.

22. The method of producing a resin molded body according to claim 21, wherein, in the injection step, the thermosetting resin composition is impregnated into the reinforcing fiber substrate and forms a fiber-reinforced resin layer on the surface of the resin porous body.
